# EUROPÄISCHE PATENTANMELDUNG

(11) **EP 1 469 213 A1**
(43) Veröffentlichungstag der Anmeldung: **20.10.2004**
(21) Anmeldenummer: 03101057.2
(22) Anmeldetag: 17.04.2003
(51) Int. Cl.: F16D 3/16

(54) **Tribosysteme für Antriebswellen**

(71) Anmelder: Ford Global Technologies, LLC, A subsidary of Ford Motor Company, Dearborn, MI 48126 (US)
(72) Erfinder: Keller, Harry, 40699, Erkrath (DE); Woydt, Mathias, 12203, Berlin (DE)
(74) Vertreter: Drömer, Hans-Carsten, Dr.-Ing.

(57) **Zusammenfassung**

Tribosysteme für Antriebswellen, die aus Triboelementen wie Kugeln, Rollen, Nadelrollen, Innennaben, Außenglocken, Tripodensternen, Gelenkkreuzen, Käfigen und dergleichen bildbar sind, wobei die Triboelemente
f) aus Stählen, und/oder thermochemisch behandelten, und/oder galvanisch beschichteten, und/oder mit harten Dünnschichten versehenen Stählen; und/oder
g) aus hochfesten Aluminium-Legierungen, und/oder thermochemisch behandelten, und/oder galvanisch beschichteten, und/oder mit harten Dünnschichten versehenen Aluminium-Legierungen; und/oder
h) aus hochfesten Magnesium-Legierungen, und/oder thermochemisch behandelten, und/oder galvanisch beschichteten, und/oder mit harten Dünnschichten versehenen Magnesium-Legierungen; und/oder
i) aus ingenieurkeramischen Werkstoffen, und/oder mit harten Dünnschichten versehenen keramischen Werkstoffen; und/oder
j) aus Leichtstahllegierungen
bestehen.

## Beschreibung

Die Erfindung betrifft Tribosysteme vornehmlich für Antriebswellen, die aus Triboelementen wie Kugeln, Rollen, Nadelrollen, Innennaben, Außenglocken, Tripodenstemen, Gelenkkreuzen, Käfigen und dergleichen bildbar sind nach dem Oberbegriff des Anspruchs 1.

Dabei geht es insbesondere um die werkstoffliche Ausgestaltung von Triboelementen für Tribosysteme, die aus mindestens zwei Bauteilen bestehen, die über je eine Oberfläche bzw. Oberflächenschicht miteinander in trockenem Reibkontakt stehen, insbesondere einer Seitenwelle für einen ungeschmierten Betrieb, sowie für Fettschmierung in der Ausführung als Gleichlauf-, Fest-, Verschiebe-, Hochdrehzahl- und Kreuzgelenk.

Seit Einführung der Gleichlaufgelenke (Constant velocity joints, {CVjoints}) basierend auf der Konzeption durch Rzeppa in den zwanziger Jahren, konzentrierte sich die Weiterentwicklung auf die Beherrschung der Bewegungskinematik, schwerpunktsmäßig für die konstruktive Ausgestaltung der Gelenke, der Belastungszustände und der Fertigungstechnik. Für eine tribologieorientierte Werkstoffentwicklung, der Anwendung von Leichtmetallen in den Gelenken sind in der Fachund Patentliteratur kaum Ansätze bekannt geworden, allenfalls bei der Fettentwicklung (DE OS 19530504, EP 0 668 900 B1).

Es haben sich nur weniger Werkstoffe als geeignet erwiesen, unter hohen Hertzschen Pressungen bis hin zu höchsten Drehzahlen der Rollbeanspruchung überrollfest standzuhalten. Zu den bewährtesten Wälzlagerwerkstoffen mit höchsten Überrollungszahlen zählen 100Cr6H (DIN EN 1.3505, entspricht UNS G52986 oder AISI 52100), M50 und AISI 440C (X102CrMo17). Allerdings erfordern die Hertzschen Pressungen im Bereich von 2.000 MPa bis 4.000 MPa zur Vermeidung des adhäsiven Versagens eine Fettschmierung mit ausgeprägten "extremly pressure" Eigenschaften (EP). Die Fette enthalten Hochdruckadditive (EP-Additive) auf Basis von MoS₂, Mo-Dithiocarbamate oder Zndithiodialkylphosphate (Zndtdp).

Bei Schlupfanteilen oberhalb von 5% finden, unter flüssiggeschmierten Bedingungen, bevorzugt Werkstoffe wie 16MnCr5 (DIN EN 1,7131), C45E (Ck45, DIN 1.1201), "Schalenhartguss" oder Cf53 eine Anwendung, wie z.B. in Ventiltriebsteilen oder Zahnflanken.

Beispielsweise, in einem Kugel-Gleichlauf-Festgelenk bilden die käfiggeführten Kugeln mit der Glocke bzw. dem Gelenkaußenteil, der Innennabe und dem Käfig die verschiedenen Tribosystemen aus, die im Stand der Technik fettgeschmiert werden müssen. Ein Faltenbalg schützt sämtliche Seitenwellengelenke vor Fremdpartikel, Korrosion und hält das Fett innerhalb des Systems.

Im Kundengebrauch entstehen Ausfälle insbesondere infolge von Beschädigungen des elastomeren Faltenbalges durch Mader, Steinschlag, Werkstofffehler sowie Ermüdungs- und Warmrissen, so daß die Fettfüllung ausläuft. Als direkte Folge versagen die Triboelemente durch Adhäsion und/oder abrasiven Verschleiß durch die eingeschleppten Fremdpartikel, die für den Kunden zu einer kostenintensiven Instandsetzung mit Nutzungsausfall führen.

Sechs Kugeln (Gegenkörper; <100% Eingriffsverhältnis) aus dem Werkstoff 100Cr6H (DIN EN 1.3505, entspricht UNS G52986 oder AISI E52100) werden in CV-Gelenken verwendet. Die Toleranzklasse ist sehr grob und entspricht denen von Ventilkugeln oder ist größer als "grade 24". Der E-Modul beträgt 210 GPa, die Rißzähigkeit ca. 23 MPa√m und die Zugfestigkeit >2.000 MPa.

Die Glocke (Grundkörper; 100% Eingriffsverhältnis) ebenso die Kugel-Innennabe werden aus dem Stahl für Oberflächenhärtung C53G (Cf53, 700 MPa< σ_{Zug}< 1300 MPa, DIN EN 1.1213, mit der Analyse 0,5-0,57% C, 0,4-0,7% Mn, 0,15-0,35% Si) gesenkgeschmiedet und auf 58-63 HRC induktionsgehärtet, entspricht einer Vickers-Härte zwischen 6.500 MPa bis 7.700 MPa. Wahlweise findet auch der Einsatzstahl 16MnCr5 (800 MPa< σ_{zug}< 1200 MPa, DIN EN 1.7131, mit der Analyse 0,13-0,19% C, 1,0-1,3% Mn, 0,8-1,1% Cr) mit einer Einsatzhärtetiefe von ca. 1 mm Verwendung. Der Werkstoff C53G wird vom GKN-Patent DE19726909 beansprucht und soll dem SAE 1050 entsprechen.

Die Bahnen werden mit ca. 15 µm Formtoleranz und einer Rauheit Rₐ von ca. 1 µm und R_{z} von ca. 10 µm geschliffen.

Normalisierte Stähle, wie C15 (1.0401), oder normalisierte Vergütungsstähle, wie 16MnCr5 und 15Cr3 (1.7015) versagen bei Raumtemperatur adhäsiv mit unadditiviertem Mineralöl bei 1.050 MPa bis 1.180 MPa Hertzscher Pressung, was für Stähle die höchsten Werte darstellen. Aus diesen Ergebnissen wird klar, daß die heute verwendeten Werkstoffe bei dem Pressungsniveau in den Triboelementen eines Gelenkes nur mit EP-haltigen Fetten adhäsionsfrei bleiben und aus der Erfahrung heraus als tribologisch optimale Werkstoffe qualifiziert wurden.

Stähle mit Sonderkarbiden (CrₓC_{y}), wie X210Cr12, erreichen 1.000 MPa Fresslastgrenze, wohingegen das martensitische Gefüge oder Legierungselemente wie besonders Nickel, Molybdän und Vanadium die Neigung zum adhäsiven Versagen verstärken.

Ein fettfreies, nicht durch Faltenbälge vor äußeren Einflüssen geschütztes Gelenk kann nur über eine innovative Werkstofftechnik als verschleißbeständiges Triboelement gegen Kontaminationen jeglicher Art ausgeführt werden. Das härteste, natürlich vorkommende Mineral ist feuergetrockneter Quarzsand mit Härten zwischen 7.500 MPa< Hv < 12.000 MPa. Sollen die Tribosystemen unter Eintrag von Fremdpartikeln in der Verschleißtieflage betrieben werden bzw. unter abrasiven Bedingungen niedrige Verschleißkoeffizienten aufweisen, können gehärtete Stähle oder gar Leichtmetalle nicht angewandt werden.

Die Aufgabe der vorliegenden Erfindung besteht folglich darin, Werkstoffe und Schichtsystemen zu entwickeln, die die o.g. Nachteile vermeiden und bei Hertzschen Pressungen größer als 2.000 MPa unter ungeschmierten Bedingungen adhäsionsfrei unter abrasiven Bedingungen durch Kontamination mit natürlich vorkommenden Mineralien einen Verschleißkoeffizienten (nach DIN 50324 oder ASTM G99) zwischen 4x 10⁻⁹ bis 2,4x 10⁻⁸ [mm³/Nm] aufweisen und überrollfest mit 100-300 Millionen Überrollungen sind.

Eine weitere Aufgabenstellung besteht darin, auf Stählen und Leichtmetallen eine tribologische Funktionsfläche derart durch geeignete thermochemische Behandlungen und /oder weiteren Beschichtungen aufzubauen, daß sie für die Beanspruchung in Tribosystemen mit Hertzschen Pressungen über 2.000 MPa dauerhaft auch unter abrasiven Bedingungen adhäsionsfrei funktionstüchtig werden.

Erfindungsgemäß wird diese Aufgabe durch die Merkmale des Anspruchs 1 gelöst. Vorteilhafte Ausführungen bzw. Weiterbildungen der Erfindung sind in den Ansprüchen 2 bis 18 enthalten.

Es wurde überraschend gefunden, daß die o.g. Aufgabenstellungen erfüllt werden, wenn die Triboelemente aus Stählen, und/oder thermochemisch behandelten, und/oder galvanisch beschichteten, und/oder mit harten Dünnschichten versehenen Stählen und/oder aus hochfesten Aluminium-Legierungen, und/oder thermochemisch behandelten, und/oder galvanisch beschichteten, und/oder mit harten Dünnschichten versehenen Aluminium-Legierungen und/oder aus hochfesten Magnesium-Legierungen, und/oder thermochemisch behandelten, und/oder galvanisch beschichteten, und/oder mit harten Dünnschichten versehenen Magnesium-Legierungen und/oder aus ingenieurkeramischen Werkstoffen und/oder mit harten Dünnschichten versehenen keramischen Werkstoffen und/oder aus Leichtstahllegierungen bestehen.

Nach einem bevorzugtem Merkmal bestehen die Triboelemente aus stickstofflegierten Stählen (SLS) mit 0,3 Gew.-% < N < 1,5 Gew.-%, wobei die stickstofflegierten Stähle (SLS) insbesondere X30CrMoN15-1 (DIN EN 1.4108) und/oder Cr15Mo1C0,15N0,38 und/oder Cr16Mo1C0,33N0,33 sind. Die Stähle sind SAE 15B15Cr bis 15B35 Cr (entspricht AISI/SAE J 1268, UNS H15211), 35 MnCr5, 30MnB4 (DIN 1.5526), 42 CrMo4 (DIN 1.7225) und X155CrVMo12-14 (DIN 1.2379).

Vorteilhaft ist auch, wenn für die Triboelemente ingenieurkeramischen Werkstoffe gesinterte, gasdruckgesinterte oder gehippte Ingenieurkeramiken, wie mit 10% bis 20 Gew.-% CeO₂ stabilisiertes ZrO₂, stabilisiertes ZrO₂ mit 3,0 bis 4,0 Mol-% Y₂O₃, mit 8-20 Vol.-% (Y₂O₃-stabilisiertes ZrO₂) verstärktes Al₂O₃, Si₃N₄ mit weniger als 10 Gew.-% Sinteradditiven verwendet werden. Eine Konzentration von 0,5-3 Mol-% Y₂O₃ in ZrO₂ ist möglich, sobald die ZrO₂-Korngröße auf < 300 nm reduziert wird.

Nach einem weiteren bevorzugten Merkmal der Erfindung besitzen die hochfesten Aluminium-Legierung eine Zugfestigkeit von mindestens Rm>450 MPa und bestehen aus den Legierungssystemen Al_{100-a-b-c}SeₐMe_{b}T_{c}, mit Se= Seltenen Erden, Me= Fe, Ni, Co und T= Mn, Co, Cr, Zr, Cr oder V, sowie 0,5 at.-%< A< 5 at.-%, 5 at.-%< 5< 15at.-% und 0,2at.-%< c< 3 at.-%, Al_{Rest}FeₐV_{b}X_{c}, wobei X= Zn, Co, Ni, Cr, Mo, Zr, Ti, Hf, Y oder Ce, mit 7 Gew.-% < a < 15 Gew.-%, 2 Gew.-% < b < 10 Gew.-% und c < 5 Gew.-% oder der Werkstoffklasse "AA20xx".

Vorteilhafter Weise besitzen die hochfesten Magnesium-Legierungen eine Zugfestigkeit von mindestens Rm>300 MPa und bestehen aus den Legierungssystemen MgₐAl_{b}Me_{c}, wobei Me= Ga, Sr und Ba bedeuten, mit 2< b < 12 und 1 < c < 10, sowie den Legierungssystemen Magnesium/Seltenen Erdenmetallen, wobei Cu, Ni, Sn, Zn und Ca, Al und Si bedeuten.

Nach einem anderen bevorzugten Merkmal der Erfindung weisen die galvanischen Beschichtungen der Triboelemente eine Schichtdicke zwischen 10 µm und 200 µm, oder zwischen 200 µm und 500 µm auf, und bestehen aus Nickelschichten mit bis zu 18 Gew.-% Phosphor, oder nano-kristallinen Chromschichten, wobei die nano-kristallinen Chromschichten zusätzlich eingelagerte Nanoteilchen aus Diamant, CrN, Cr₂N, oder Cr₃C₂ mit Partikelgrößen kleiner als 100 nm enthalten können.

Die durch thermochemische Behandlungen wie, Vanadieren, und/oder Borieren und/oder Gasborieren auf den Oberflächen der Triboelemente erzeugten tribologischen Funktionsschichten weisen nach einem weiteren Merkmal eine Schichtdicke zwischen 10 µm und 100 µm auf. Von Vorteil ist auch, wenn die borierten und vanadierten tribologischen Funktionsschichten nach der thermochemischen Behandlung bei 400°C bis 600°C ca. eine halbe bis zwei Stunden an Luft oder Wasserdampf voroxidiert werden.

Vorteilhaft weisen die harten Dünnschichten Schichtdicken zwischen 1 µm und 10 µm auf und bestehen aus CrN oder Cr₂N und stöchiometrische Mischungen daraus, TiCₓ mit 0,7<x≤1,0 , nano-kristallinen Diamant mit Kristallitgrößen zwischen 10-50 nm, ultranano-kristallinen Diamant mit Kristallitgrößen zwischen 2-10 nm, ADLC-Schichten als beliebige Gemische aus sp²- und sp³-hybridisiertem Kohlenstoff-Atomen und mit beliebigen Anteile an Wasserstoff, wobei die ADLC oder nano- oder ultrakristallinen Diamant-Schichten mit bis 10 At.-% der Metalle, wie Ti, Zr, Hf, Si, Ta oder W, oder Mischungen daraus dotiert und die Dotierung über der Schichtdicke auch gradiert sein kann.

Nach einem weiteren Merkmal ist auch vorgesehen, daß unterhalb der Schichten aus ADLC, bzw. der nano-, oder der ultrakristallinen Diamant-Schichten haftverbessernde Zwischenschichten aus Ti, Zr, Hf, Si, Ta oder W, oder Mischungen daraus, aufgebracht sind.

Zum Umfang der Erfindung gehört auch, daß die Beschichtungen mittels Physical Vapor deposition (PVD), wie Radio Frequency (RF) sputtering, Magnetron reactiv sputtering, electron-beam directed vapor-deposition (EB-DVD, EB-PVD, Elektronenstrahlverdampfen), Chemical Vapor Deposition (CVD), wie Plasma Enhanced (PE)-CVD, Low-pressure (LP)-CVD, dem Plasma-Nitrieren von Aluminium aufgebracht werden, wobei die Substratoberflächen vor dem Beschichten desoxidiert werden. Vorzugsweise werden die Substrate vor dem Beschichten in reduzierender Atmosphäre desoxidiert.

Nach einem anderen bevorzugten Merkmal der Erfindung bestehen die Triboelemente aus Leichtstahllegierung, welche mit 10 -30 Gew.-% Al und/ oder 1 - 5 gew.-% Si und/oder 1,0 - 10 Gew.-% Vanadium neben Kohlenstoff legiert sind, wobei die Möglichkeit besteht, daß der Leichtstahllegierung Kohlenstoff und/oder ZrB zulegiert ist. Insbesondere ist vorgesehen, daß die Leichtstahllegierung z.B. aus AL-8,5Fe-1,7Si-1,3V (AA 8009) besteht.

Nachfolgend soll die Erfindung anhand von die Ansprüche stützenden Ausführungsbeispielen erläutert werden.

Die Bewertung der Werkstoffe und Beschichtungen orientiert sich dabei an den Ergebnissen einer tribologischen Beanspruchungsanalyse ohne die mechanischen Beanspruchungen zu berücksichtigen. Die Druckfestigkeit eines Oberflächenelementes oder ersatzweise die Härte sollte größer als die jeweilige Hertzsche Pressung sein und zur Minimierung des abrasiven Verschleißbetragen muss die Vickers-Härte der Oberfläche in einem ungekapselten Gelenk auf mindestens 11.000 MPa bis 12.000 MPa angehoben werden, insbesondere bei den Leichtmetallen. Die Verschleißkoeffizienten ungeschmierter Kandidatpaarungen sollen im Bereich von kᵥ = 4x 10⁻⁹ bis 2,4x 10⁻⁸ (mm³/Nm] liegen und möglichst unabhängig von der relativen Luftfeuchte sein.

Für den angenommenen Linienkontakt zwischen den Rollen und der Glockenaußenbahn aus Stählen in einem Tripoden-Gelenk errechnen sich in der Literatur Hertzsche Pressungen zwischen 1,5 GPa und 2,5 GPa, wohingegen die Nadelrollen mit bis zu 3,8 GPa beansprucht werden. Für die Tribosysteme "Kuge/Innennabe" ergeben sich zwischen 2.800 und 4.200 MPa und "Kugel/Glocke" in CV-Gelenken zwischen 1.400 bis 2.100 MPa. Diese Hertzschen Pressungen sind Maximalgrößen, wenn die Last nur über eine Kugel oder einen Arm der Tripode übertragen wird.

Im Sinne der Aufgabenstellung der Erfindung müssen die Werkstoff- und Schichtsysteme 100 bis 300 Millionen Überrollungen standhalten.

Der erforderliche Verschleißkoeffizient der ungeschmierten Tribosysteme lässt an Hand der verschleißbedingten Toleranzzunahmen in den Bahnkonturen gelaufenen z.B. CV-Gelenke ermitteln, die ca. 25 µm und z.T., mehr betragen. Die radiale Spielzunahme darf max. 30 µm betragen, die beim CV-Gelenk auf die Tribosysteme "Kugel-Innennabe" und "Kugel/ Glocke-Gelenkaußenteil" aufzuteilen ist.

Aus den Breiten, Längen und Verschleißtiefen der Bahnen schätzen sich Verschleißvolumina für die Glockenbahn von 1,5-2,5 mm³ und für die Innennabe von 3-5 mm³ ab.

Die errechneten Verschleißkoeffizienten von 1,2x 10⁻¹⁰ [mm³/Nm] bei 42 kN für die Glockeninnenbahn und >1,3x 10⁻⁹ bei 7 kN für die Innennabe stellen Extremanforderungen dar, da über der gesamten Lebensdauer eine permanenter Schlupf von 100% (also 100% Gleiten) bei maximalen wirkenden Normalkräften (Drehmomenten) angenommen wurde. Die Verschleißkoeffizienten erhöhen sich allein durch die Verwendung des effektiven Gleitweges um den Faktor 33 auf kᵥ 4x 10⁻⁹ bis 2,4x 10⁻⁸ [mm³/Nm].

Das CV-Gelenk mit Kugeln kann vorzugsweise aus Si₃N₄ oder/und ZrO₂ oder stickstofflegierten Stählen bestehen, aus denen ebenfalls die spitzenlos bearbeiteten keramischen Nadeln/Rollen des Tripodengelenkes bestehen können.

ZrO₂-Qualitäten sind dem Si₃N₄ vorzuziehen, weil das ZrO₂ mit einem E-Modul nahe dem Stahl die Hertzschen Pressungen nicht oder kaum erhöht, die Biegebruchfestigkeit ca. das Doppelte von Si₃N₄ betragen kann und die Verschleißkoeffizienten gegen Stähle, insbesondere unter Einwirkung von Fremdpartikeln, um den Faktor 10 niedriger sind als die von Paarungen aus Si₃N₄/Stahl. Weiterhin ergeben sich für das ZrO₂ niedrigere Kugelpreise.

Die stickstofflegierten Stähle Cr15Mo1C0,15N0,38 und Cr16Mo1C0,33N0,33 sind korrosionsbeständig und können in ungeschmierten und vorzugsweise fettgeschmierten Gelenken als Kugeln oder Nadeln eingesetzt werden.

Nitrierte, stickstofflegierte Stähle sowie borierte und vanadierte Stähle können für Kugeln und Rollen mit in Betracht gezogen werden.

Glocken, Tripodensterne oder Innennaben aus den stickstofflegierten Stähle Cr15Mo1C0,15N0,38 und Cr16Mo1C0,33N0,33 sind korrosionsbeständig und können in ungeschmierten Gelenken eingesetzt werden.

Einsatzstahl SAE 15B15Cr entspricht AISI/SAE J1268, UNS H15211 mit Sonderanalyse 0,12%-0,15% C, 0,20%-0,35% Si, 0,85%-1,15% Mn, 0,15%-0,30% Cr und <0,004% B (kaltfließpreßbar) und der Vergütungsstahl 35MnCr5 besitzt die Sonderanalyse 0,32%-0,35% C, 1,2%-1,4% Mn, 0,35%-0,45% Cr, 0,2%-0,35% Si, und <0,035% S.

Poren- und rißfreie, galvanisch abgeschiedene Chromschichten gewährleisten den Korrosionsschutz und erfüllen die Funktion einer Stütz- und Haftschicht für nachfolgende ADLC- und Diamantschichten. Diese Nanochromschicht können bis ca. 280°C angewandt werden, da oberhalb von 280°C H₂ entweicht. Sie können auf Aluminium oder Magnesium mit Schichtstärken bis 500 µm dargestellt werden und verfügen über eine Härte von 12.000 MPa bis 14.000 MPa.

Chromschichten können auch durch vakuumgestützte Prozesse abgeschieden werden, wobei in die Schicht Nano-Partikel aus CrN oder Cr₃C₂ eingelagert werden. Mit ~10 Gew.-% Hartstoff erhöht sich die Härte der Chromschicht auf HV0,1 = 16.000 MPa. Weiterhin können Chromschichten mit sphärischen Diamantpartikel dispersionsverstärkt und auf 7,5 nm maßbeschichtet werden. Die Härte der Schicht ist größer Hₖₙₒₒₚ von 12.000 MPa.

Unter den galvanisch Nickelschichten erzielen die mit 12 Gew.-% Phosphor und mehr stromlos abgeschiedenen Nickel-Phosphor-Schichten mit die größten Härten bis 10.000 MPa, weil sich durch Wärmebehandlungen bei 400°C während 1 h die Ni₃P-Phasen ausscheiden. Sie erzielen auf Aluminium-Werkstoffen Haftfestigkeiten von deutlich über 400 MPa und lassen sich mit Toleranzen in der Schichtdicke von <±2% als "Maßbeschichtung" aufbringen.

Vor dem Hintergrund der hohen Hertzschen Pressungen unter der stoßartigen Beanspruchungen können die tribologisch beanspruchten Oberflächen der Innennabe oder des Tripodensterns nur aus Stählen (SAE 15B15Cr, 35MnCr5, stickstofflegierte Stähle) ausgebildet und die Oberflächen vorzugsweise durch "Niedertemperatur"-Vanadieren und/oder -Borieren thermochemisch behandelt werden.

Es ist durchaus von grundsätzlichem Interesse, eine Innennabe aus hochfesten Leichtmetallen derart auszubilden, indem diese dann nitriert und/oder mit dickem Nano-Chrom und anderen Schichten beschichtet und anschließend z.B. mit einer glatten nanokristallinen Diamant-Schicht beschichtet werden oder aus keramischen Werkstoffen (ZrO₂, Si₃N₄) endkonturnah aus spritzgegossenen Grünkörpern auf ~0,2% Genauigkeit gefertigt werden. Auch bei keramischen Werkstoffen lassen sich die tribologischen Funktionsflächen der Innennabe durch Honen wirtschaftlich endbearbeiten.

Chromnitride werden in der kubisch-flächenzentrierten Struktur als CrN mit Hᵥ~ 11.000 MPa oder als hexagonales Cr₂N mit Hᵥ~16.000 MPa oder beliebigen Stöchiometrien dazwischen, aufgebracht. Der Vorzug von Cr₂N ist das Abscheiden mittels Sputtern als äußerst haftfeste Schichten auf weichen Substraten, wie Ti6A14V.

Nach dem "Chemical Vapor Deposition" Verfahren (CVD) können bei Temperaturen unterhalb von 700°C "glatte" Diamantschichten abgeschieden werden, die nicht mehr endbearbeitet werden müssen. Durch Erhöhung der Keimbildungsdichte von ca. 10⁷-10⁸ cm⁻² auf 10¹⁰-10¹¹ cm⁻² und Einsatz des plasmaunterstützten CVDs gelingt es, Diamantschichten bis 20 µm Schichtdicke mit geringen Eigenspannungen von <200 MPa und Rauheiten von Rₐ ~10 nm bis ~3 nm herzustellen.

Die Kristallitgröße läßt sich durch das "pulsed plasma UV-ecximer laser assisted PVD" herunter bis in den amorphen Zustand senken. Dabei verfügt die Schicht über Zugfestigkeiten von 4-8 GPa bei einem E-Modul von 670-800 GPa. Durch Anlassen auf >575°C werden alle Eigenspannungen entfernt.

Unter dem Begriff "amorphe Diamantschichten", mit den Synonymen "amorphous diamond like coatings" (ADLC), "diamond like carbon" (DLC), "amorphous hydrogenerated carbon" (a-C:H), "ion bombarded carbon" (i-Carbon oder Me-CHx werden allgemein Kohlenstoff-Schichten mit bis zu 65 At. -% Wasserstoff und einem Verhältnis von sp³/sp²hybridsiertem Kohlenstoff verstanden

Bei den metallhaltigen Me-C:H-Schichten beeinflussen die zudotierten Metalle, wie Ti, Zr, Hf, Si, Ta oder W, das tribologische Verhalten. Nach dem Überschreiten der Löslichkeitsgrenze dieser Metalle im Kohlenstoff, scheiden sich Karbide von ca. 5 nm Größe in der amorphen Matrix aus, so daß von Nano-Composites gesprochen wird. Titan, Silizium, Zirkon und Chrom können zusätzlich als haftungsverbessernde Zwischenschicht angewandt werden, die auch gradiert in die ADLC-schicht übergehen können.

Thermochemische Behandlungen erzeugen aus den metallischen Werkstoffen heraus keramische Schichten und wandeln die metallische Bindung der Metalle in eine ionisch-kovalente Bindung um. Dadurch verbessert sich erheblich der Schutz von Adhäsion und Abrasion der Triboelemente ohne monolithische Keramiken einzusetzen. Die Haftfestigkeit der thermochemischen Beschichtungen stellt einen Kernvorteil dieser Oberflächenbehandlung dar, weil die Schichten aus dem Werkstoff heraus gebildet werden. Dabei bleibt die gewohnte Zähigkeit des metallischen Substrates im wesentlichen erhalten.

Die klassische Vanadierung erfolgt zwischen 800 °C und 1100 °C.

Auch das Borieren vollzieht sich bei Behandlungstemperaturen zwischen 800°C und 950°C, indem Boratome in die Stahloberfläche eindiffundieren. Eine Dicke der Funktionsschicht von 10 µm bis 20 µm ist genügend.

Zur Minimierung des Einlaufverschleiß und der abrasiven Wirkung der Borcarbid- oder Vanadiumcarbid-Schicht sollten die Funktionsflächen vor dem Borieren oder Vanadieren auf Rauheiten von Rₐ < 0,03 µm gehont sein. Die Voroxidation der borierten oder vanadierten Oberflächen bei 400°C bis 600°C während ca. einer halben Stunde bildet sich vor dem Einbau bereits die vor Verschleiß schützende Schicht aus B₂O₃ und H₃BO₃ oder V₂O₅ aus.

Im Stoffsystem Al_{100-a-b-c}SeₐMe_{b}T_{c}, mit Se= Seltenen Erden, Me= Fe, Ni, Co und T= Mn, Co, Cr, Zr, Cr oder V sowie 0,5 at.-%< A< 5 at.-%, 5 at.-%< 5< 15at.-% und 0,2at.-%< c< 3 at.-%, entstehen bei Abkühlungsgeschwindigkeiten der Schmelztropfen von ΔT> 10⁵ K/s Gefüge mit Partikelgrößen zwischen 1 nm und 100 nm .

Die Al₈₅Ni₅Y₈Co₂-Legierung erzielte mit einem Anteil von 75% amorphen Phasenzustandes mit σ_{Zug}= 1250 MPa die höchsten Werte bei einem Sauerstoffgehalt von <0,05 Gew.-%, so daß nur ein Vakuum- oder Inert-Verfahren in Frage kommt. Das Optimum bezüglich der Festigkeit mit ca. 25% kristallinem Phasenanteil ergibt ein nicht zu enges Prozeßfenster.

Im Stoffsystem Al_{Rest}FeₐV_{b}X_{c}, wobei X= Zn, Co, Ni, Cr, Mo, Zr, Ti, Hf, Y oder Ce, mit 7 Gew.-% < a < 15 Gew.-%, 2 Gew.-% < b < 10 Gew.-% und c < 5 Gew.-%, bilden sich Gefüge aus Al-Kristallen mit aus der übersättigten Lösung ausgeschiedenen Dispersoiden aus intermetallischen Phasen. Für Abkühlungsgeschwindigkeiten der Schmelztropfen von ΔT> 10⁶ K/s betragen die Kristallitgrößen zwischen 10 nm und 10 nm. Diese Legierungen sind z.B. bei 430°C schmiedbar. Die Elastizitätsmoduli liegen zwischen 98 GPa < E < 110 GPa.

Magnesium lässt sich ebenfalls durch Zugabe von Seltenen Erden und Metallen, wie Cu, Ni, Sn, Zn und Ca, Al und Si, und hohen Abkühlungsgeschwindigkeiten amorphisieren und dadurch die Zugfestigkeit Rₘ^{22°C} auf bis zu 700 MPa anheben. Allerdings erhöhen Legierungselemente, wie Ni, Ce oder Cu, mit den angestrebten Konzentrationen die Dichte bis 20 At.-%.

Die amorphen Magnesium-Legierungen werden als spröde abgesehen. Duktile Mg-Legierungen enthalten >50 Vol.-% kristalline Anteile. Auch wenn die amorphen Gefügen die höchsten Festigkeiten liefern, so ist für die Warmfestigkeit das feine Sub-Mikron-Gefüge mit den ausgeschiedenen Dispersoiden entscheidend. Die Legierungen können unterhalb der Rekrisallisationtemperatur stranggepreßt und umgeformt werden.

Durch das Stoffsystem MgₐAl_{b}Me_{c}, wobei Me= Ga, Sr und Ba bedeuten, mit 2< b < 12 und 1 < c < 10, werden die Nachteile der amorphen Struktur und der damit verbundenen hohen Abkühlungsgeschwindigkeit überwunden. Die Gefügekörner sind kristallin mit einer Korngröße < 1 µm. Abkühlungsgeschwindigkeiten von ΔT> 10⁵ K/s sind ausreichend. Dieses Stoffsystem ermöglicht zudem "warmfeste" Mg-Legierungen bis max. ca. 250°C.

Aus den mechanischen Eigenschaften von hochfesten Magnesium- und Aluminium-Legierungen kann in jedem Fall gefolgert werden, daß grundsätzlich Qualitäten zur Verfügung stehen, welche die mechanischen Kräfte im Gelenk aufnehmen. Unabhängig von der Beantwortung der Frage nach der tribologischen Belastbarkeit der Magnesium- oder Aluminium-Legierungen mit Pressungen von z.B. 2.000 MPa, kann die "Kugelbahn" oder "Rottenbahn" in CV- und Tripodengelenken aus Stahleinlegeteilen gestaltet werden, welche von dem Mg- oder Al-Werkstoff umgossen werden. Dieses Einlegeteil senkt für die Leichtmetalle die "Pressungen", weil die Hertzsche Pressungen vom "Eintegeteit" im Kontaktbereich der Kugel oder Rolle auf große Matrixflächen verteilt werden. Die feste Einbettung oder Verankerung in die Matrix gewährleisten sog. Tannenbau oder Schwalbenschwanzfüße an der Matrix zugewandten Seite.

Bei der Auswahl des Stahlwerkstoffes für das Einlegeteil muss im Hinblick auf Härtungs- oder Vergütungsgefüge berücksichtigt werden, daß die Gießtemperaturen von Al- und Mg-Legierungen größer als 650°C betragen. Vorzugsweise können diese Einlegeteile aus stickstofflegierten, vanadierten oder borierten Stählen eingesetzt werden, die funktionale Eigenschaften durch diese Gießtemperaturen unbeeinflusst bleiben.

Das Eingießen eines Einlegeteiles wendet man vorzugsweise bei Tripodengelenken der Kugelgleichlauf-Festgelenke und bei den Außenglocken von CV-Gelenken an.

Die Lösung mit Eingussstücken aus Stahl wird zur Erhöhung der Struktursteifigkeit von Kurbelgehäusen aus Magnesium im Niederdruckgießverfahren verfolgt.

Die Gewichtserspamis für eine Legierung mit 25 Gew.-% Aluminium beträgt gegenüber Eisen beträgt 32%. Derartige Legierungen wurden bereits z.B. für Automobilbleche oder Bremsscheiben vorgeschlagen. Das Aluminium bildet mit dem Eisen die intermetallische Phase Fe₃Al neben Al₄C₃-Ausscheidungen. Größere Aluminium-Gehalte über 25 Gew.-% Al sind deshalb nur pulvermetallurgisch herstellbar.

Unter den Metal Matrix Composites (MMC's) werden Dispersoide aus Al₂O₃, Al₄C₃ und TiB₂ verwendet, um die Festigkeit und Warmfestigkeit auf bis zu 850 MPa abzuheben. Ein MMC mit Al₄C₃-Dispersoiden erzielt eine Al-Legierung "AlC3O1" mit 1,5 vol.-% Al₂O₃ und 12 vol.-% Al₄C₃ die höchste Kriechbeständigkeit und Zugfestigkeit. Diese Legierungen werden entweder über die Schmelzmetallurgie oder Pulvermetallurgie hergestellt.

Siliziumnitride sind im Allgemeinen überrollfest, wenn der Additivgehalt unter 5 Gew.-% und die mittlere Korngröße unter 1 µm liegen. Die Überrollfestigkeit von bestimmten Siliziumnitriden wurde bis zu einer Hertzschen Pressung von 6,9 GPa nachgewiesen.

Neben Si₃N₄ kristallisierte sich in den letzten Jahren bestimmte Zirkondioxide als überrollfest, und demzufolge auch unter zyklischer Beanspruchung als ermüdungsfest, heraus. Das sind:
a.) mit CeO₂ stabilisiertes ZrO₂,
b.) gehipptes ZrO₂ stabilisiert mit 3,3 Gew.-% Y₂O₃ und
c.) mit ZrO₂ verstärktes Al₂O₃ (ZTA).

Mit Biegebruchfestigkeiten um σ_{4Bb}~ 2.000 MPa, Risszähigkeiten über 10 MPa√m, einer linearen Wärmedehnung von ca. 11 ppm/K und einem E-Modul zwischen 210 GPa und 250 GPa nähern sich von ZrO₂ die werkstoffphysikalischen Eigenschaften denen von Stählen an.

Die Glocke, Tripode und Nabe stellen für keramische Werkstoffe ungewöhnlich große Werkstoffvolumina und komplizierte Bauteilgeometrien dar und können grundsätzlich auch in Keramik hergestellt werden. Vorzugsweise werden aber Kugeln verwendet.

Die Endbearbeitung bestimmt bei keramischen Werkstoffen maßgeblich den Bauteilpreis. Zur Minimierung dieser Kosten hat sich die Spritzgusstechnik zur Herstellung größerer und endkonturnaher Bauteile aus Keramik bewährt, mit der engere Toleranzen als mit Gussteilen herstellbar sind und das mit Diamantwerkzeug abzuarbeitende Aufmaß auf wenige µm beschränkt wird.

Die geschliffenen Bahnflächen aus Stählen nach dem Stand der Technik sind mit einer Rauheit Rₐ ~1 µm und R_{z} von ca. 12 µm für einen Tribokontakt mit hohen Pressungen als sehr rauh einzustufen, so daß eine pressungserhöhende Vorspannung durch die Presspassung zur Kompensation des Einlaufverschleißbetrages notwendig wird, welche die Reibungsverluste erhöhen. Ebenso weisen die geschliffenen Oberflächen eine ungünstige tribologische Vorzugsrichtung auf. Mittels Honen lassen sich wirtschaftlich Rauheiten Rₐ von 0,1 µm herstellen, die der Betriebsrauheit der fettgeschmierten Gelenke nach dem Einlauf entsprechen.

Gelingt die Beseitigung des Einlaufverschleißbetrages durch den in der Endbearbeitung mittels Honen vorweggenommenen Vorgang des Einlaufverschleißes, kann die Vorspannung zurückgenommen werden. Dadurch vermindern sich die Reibungsverlusten über die Reduzierung der irreversiblen Walkarbeit der Werkstoffe in den Kugelkontakten.

Die durch Honen erzeugten glatteren Oberflächen (bzw. niedrige Plateaurauheit) ohne Vorzugsrichtung stellen eine Voraussetzung für die Anwendung von harten Dünnschichten oder thermochemisch erzeugten Schichten dar.

Die Auswahl eines Werkstoffe für Triboelemente orientiert sich an der Fähigkeit der Materialien, entweder direkt die mechanischen Kräfte und Pressungen oder nur die Kräfte oder Pressungen zu übertragen.

Es ergeben sich insgesamt die vier nachfolgenden Ausführungsvarianten, die zur Verdeutlichung in den Zeichnungen schematisch vereinfacht dargestellt sind.

Es zeigen
- Figur 1:: Fettschmierung mit größerer Tragkraft,
- Figur 2:: ein fettfreies Gelenk aus Stahlsubstraten mit thermochemischer Behandlung,
- Figur 3:: ein fettfreies Gelenk aus Stahlsubstraten mit Dünnschichten; und
- Figur 4 :: ein fettfreies Gelenk aus Leichtbauwerkstoffen mit Dünnschichten.

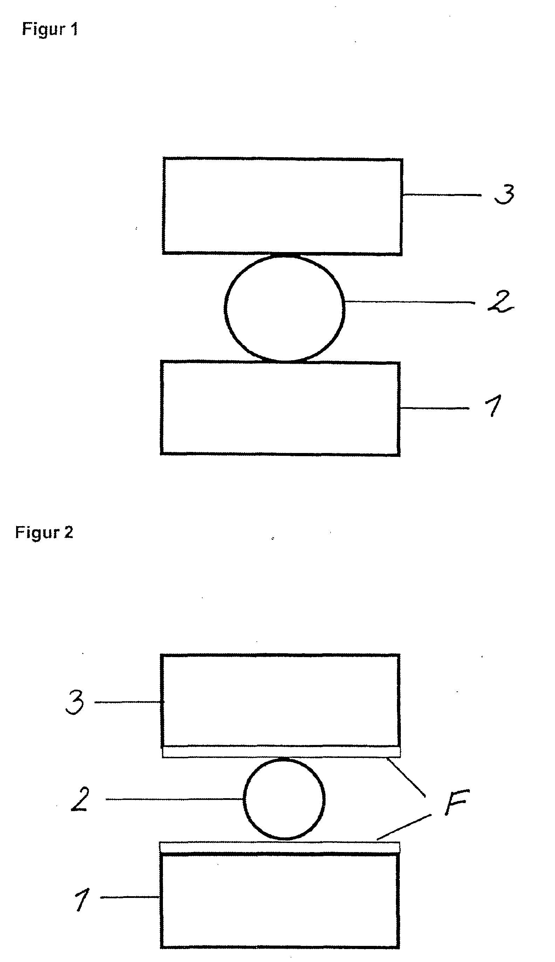

Die Erhöhung der spezifischen Beanspruchung geometrisch unveränderter Bauteile fügt sich in Leichtbauphilosophien ein. In der Figur 1 sind die werkstofftechnischen Maßnahmen zur Steigerung der Tragkraft der Gelenke dargestellt. Stickstofflegierte Stähle (SLS) oder aus der Serie SAE 15B15Cr bis 15B35Cr oder 35MnCr5 steigern in Figur 1 durch hohe Fresslastgrenzen und ihren Verschleißwiderstand die Lasttraggrenze des Gelenkes, selbst bei der Verwendung von Fetten nach dem Stand der Technik (Fette der NLGI-Klassen "0-0000" mit MoS₂ oder EP-Additiven, Grundöle af Basis von PAG oder POE), indem die Innennaben 1 bzw. Tripodensterne und die Außenglocken 3 aus ihnen gefertigt werden, wobei sog. Leichtstahl-Legierungen, wie Fe10AIC-Fe20AIC zusätzlich hineingedacht werden können. 100Cr6H als Kugel- und Rollen/Nadel-Material 2 wird durch Werkstoffe mit einer größeren Fresslastgrenze und Verschleißwiderstand, wie stickstofflegierte Stähle (SLS), Zirkondioxid- und ZTA-Werkstoffe und ggfs. durch Si₃N₄ substituiert. Die den Kugeln und/oder Rollen 2 zugewandten Oberflächen der Innennaben 1 oder Außenglocken 3 sind gehont (Ra∼ 0,1 µm, wesentlich glatter als der Stand der Technik), damit eine Oberfläche ohne Vorzugsrichtung ausgebildet wird.

In der Figur 2 sind die werkstofftechnischen Maßnahmen zur Ausbildung eines fettfreien Gelenkes mittels thermochemischer Beschichtung dargestellt. Das fettfreie Gelenk auf Basis von "Stählen" (Außenglocke 3 und Innennabe 1) lässt sich nur durch die Erhöhung der Härte oberhalb der von natürlich auf Straßen vorkommenden Mineralien, die Steigerung des Verschleißwiderstandes und der Ausschluss des adhäsiven Versagens realisieren, indem die metallischen Bindungsanteilen in Stählen in ionische und/oder kovalente Bindungen umgewandelt werden. Der Vorteil dieses Ansatzes liegt darin, daß im Grunde für die Außenglocke 3 und Innennabe 1 des Gelenks serienmäßige Werkstoffe verwendet werden, die durch eine thermochemische Behandlung für die tribologischen Beanspruchungen in einem ungeschmierten Gelenk funktionsfähig werden.

Es bieten sich hier das Borieren und Vanadieren bei Temperaturen entweder um 1000°C oder bei tiefen Temperaturen um 600°C an (Gasoder Niedertemperaturverfahren). Im Hinblick darauf, daß bei einer linearen Spielzunahme von 20 µm das CV-Gelenk als verschlissen gilt, brauchen die thermochemischen Behandlungen nicht wesentlich mehr Schichtdicke erzeugen, wobei ein Aufmaß für die Endbearbeitung vorzuhalten ist. Das tribologische Funktionsmaß der Funktionsschichten F beträgt also 20 µm plus einer "Funktionsreserve".

Vorzugsweise werden die stickstofFlegierten Stähle nitriert und die Stähle sowie die Leichtstähle vanadiert oder boriert.

Zur Minimierung des Verschleißbetrages an der Kugeln 2 durch die harten Schichten, müssen die Funktionsflächen der Schichten F durch Honen auf Werte von Rₐ<0,05 µm , vorzugsweise von Rₐ<0,01 µm, endbearbeitet werden.

100Cr6H als Kugel- und Rollen/Nadel-Material 2 muß durch Werkstoffe mit einer größeren Freßlastgrenze und Verschleißwiderstand, wie stickstofflegierte Stähle (SLS), Zirkondioxid- und ZTA-Werkstoffe und ggfs. durch Si₃N₄ substituiert werden.

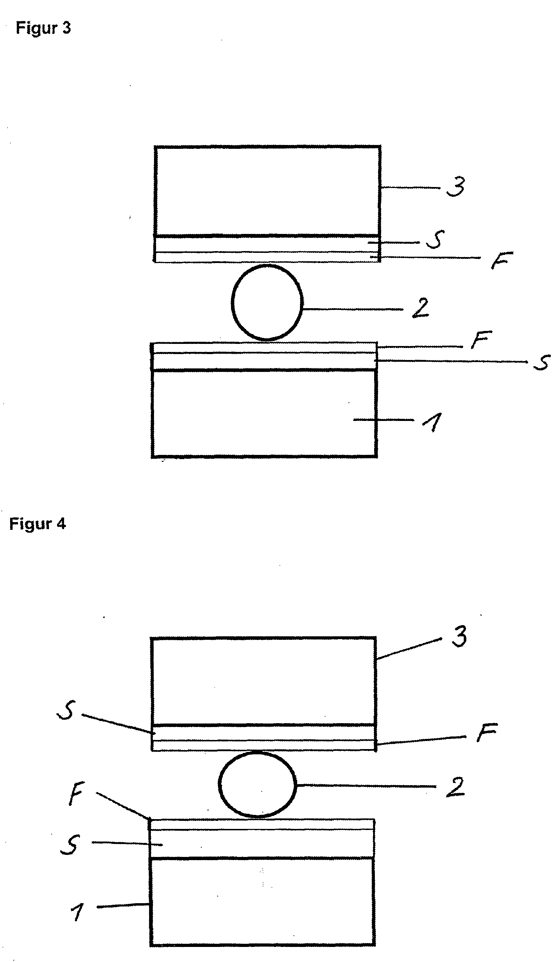

In der Figur 3 sind die werkstofftechnischen Maßnahmen zur Ausbildung eines fettfreien Gelenkes mittels Dünnschichten dargestellt. Die Verschleißkoeffizienten von kv < 10⁻⁷ bis 10⁻⁸ mm³/Nm bestimmter keramischer Stoffsysteme mit Elastizitäts-Moduli E>250 GPa lassen sich als Dünnsc chten in einem Tribosystem mit Hertzschen Pressungen größer als 2.000 MPa nur umsetzen, wenn die Hartstoffdünnschicht gut haftet und das Substrat die Schicht genügend stützt. Um die Stützwirkung zu fördern und den Gradienten der elastischen und physikalischen Eigenschaften abzubauen, wird auf den Glocken 3 und Innennaben 1 bzw. Tripodensternen aus Stählen als Substrate eine wenigstens 20 µm dicke "Stützschicht" S (20 µm nach dem Honen dieser) als Nano-Chrom, dispersionsverstärktes Chrom, Nitrierschicht bei SLS oder aushärtbaren Ni-P-Schichten aufgebracht, bevor auf diesen die tribologischen Funktionsschichten F aus Titancarbid (TiCₓ), Chromnitrid (CrN bis Cr₂N), nano- und ultranano-kristallinem Diamant oder amorphem, diamantähnlichen Kohlenstoff (ADLC und ähnliche) abgeschieden werden, wobei die ADLC-Schichten mit Ti, Zr, Hf, Si, Ta oder W oder Mischungen aus diesen dotiert sein können. Titan, Silizium, Zirkon und Chrom werden zusätzlich als haftungsverbessernde Zwischenschicht zwischen Substrat und Dünnschicht angewandt, die auch gradiert in die metall-dotierte ADLC-Schicht übergehen können.

Die mit ADLC oder Diamant zu beschichtenden Oberflächen aus den zuvor genanntem TiC, CrxN, Ni, Cr sowie vanadieren und borierten Substraten müssen in reduzierender Atmosphäre desoxidiert werden, damit die Dünnschichten eine metallurgische Bindung zum Substrat eingehen können.

Als Besonderheit und in Abweichung von den Ausführungen unter Figur 1 und Figur 2, werden die tribologischen Funktionsschichten F aus dünnen Hartstoffschichten nicht endbearbeitet, sondern "as-deposited" eingesetzt, da sie die Rauheit und Topographie der zu beschichtenden Substratoberfläche nachbilden, die gehont sind, und nur wenige µm dick (< 10 µm) sind. Deshalb muss ein Aufmaß für die aus Nano-Chrom, dispersionsverstärktes Chrom, Nitrierschicht oder aushärtbaren Ni-P bestehenden Schichten vorgehalten werden, da diese auf Rauheiten von Rₐ < 0,1 µm, vorzugsweise von Rₐ < 0,01 µm, gehont werden.

100Cr6H als Kugel- und Rollen/Nadel-Material 2 muss durch Werkstoffe mit einer größeren Fresslastgrenze und Verschleißwiderstand, wie stickstofflegierte Stähle (SLS), Zirkondioxid- und ZTA-Werkstoffe und ggfs. durch Si₃N₄ substituiert werden.

In der Figur 4 sind die werkstofftechnischen Maßnahmen zur Ausbildung eines fettfreien Gelenkes aus Leichtmetallen mittels Dünnschichten dargestellt.

Auch in der jüngsten Patentliteratur und wissenschaftlichen Literatur über ultra-hochfeste Aluminium-Werkstoffe bis Rₘ <1.560 MPa und Magnesium-Werkstoffen bis Rm <800 MPa wird berichtet, daß die Elastizitäts-Moduli von diesen metallurgischen Maßnahmen im wesentlichen unverändert niedrig im Bereich von 90 GPA> E_{Al} < 130 GPa bleiben. Andererseits stellen diese Festigkeitswerte eine notwendige Voraussetzung für die Übertragung der Kräfte im Gelenk dar.

Das für die Anwendung von Dünnschichten in der Figur 3 vorgeschlagene Werkstoff-Konzept wird übernommen, allerdings muss die Dicke der Stützschicht S auf wenigstens >100 µm, vorzugsweise auf >300 µm, besonders bevorzugt auf >500 µm angehoben werden. Weiterhin ist es vorteilhaft, die Aluminium-Werkstoffe vor dem Aufbringen der Stützschichten zu Nitrieren und diese zu desoxidieren. Auf einer unnitrierten Aluminium-Oberflächen muss diese vor dem Aufbringen der Stützschicht S aus Nano-Chrom oder Nickel desoxidiert werden, damit Nickel und Chrom eine metallurgische Bindung mit dem Aluminium eingehen können.

## Patentansprüche

1. Tribosysteme für Antriebswellen, die aus Triboelementen wie Kugeln, Rollen, Nadelrollen, Innennaben, Außenglocken, Tripodensternen, Gelenkkreuzen, Käfigen und dergleichen bildbar sind, **dadurch gekennzeichnet, daß** die Triboelemente
a) aus Stählen, und/oder thermochemisch behandelten, und/oder galvanisch beschichteten, und/oder mit harten Dünnschichten versehenen Stählen; und/oder
b) aus hochfesten Aluminium-Legierungen, und/oder thermochemisch behandelten, und/oder galvanisch beschichteten, und/oder mit harten Dünnschichten versehenen Aluminium-Legierungen; und/oder
c) aus hochfesten Magnesium-Legierungen, und/oder thermochemisch behandelten, und/oder galvanisch beschichteten, und/oder mit harten Dünnschichten versehenen Magnesium-Legierungen; und/oder
d) aus ingenieurkeramischen Werkstoffen, und/oder mit harten Dünnschichten versehenen keramischen Werkstoffen; und/oder
e) aus Leichtstahllegierungen
bestehen.

2. Tribosysteme nach Anspruch 1, **dadurch gekennzeichnet, daß** die Triboelemente aus stickstofflegierten Stählen (SLS) mit 0,3 Gew.-% < N < 1,5 Gew.-% bestehen.

3. Tribosysteme nach Anspruch 2, **dadurch gekennzeichnet, daß** die stickstofflegierten Stählen (SLS) X30CrMoN15-1 und/oder Cr15Mo1C0,15N0,38 und/oder Cr16Mo1C0,33N0,33 sind und die Stähle SAE 15B15Cr bis 15B35Cr, 35MnCr5, 30MnCr5, 30MnB4, 42CrMo4 und X155CrVMo12-14 sind.

4. Tribosysteme nach Anspruch 1, **dadurch gekennzeichnet, daß** die ingenieurkeramischen Werkstoffe für die Triboelemente gesinterte, gasdruckgesinterte oder gehippte Ingenieurkeramiken, wie mit 10% bis 20 Gew.-% CeO₂ stabilisiertes ZrO₂, stabilisiertes ZrO₂ mit 3,0 bis 4,0 Mol-% Y₂O₃, mit 0,5-3 Mol-% Y₂O₃ in ZrO₂, wobei die mittlere ZrO₂-Korngröße auf < 300 nm reduziert ist, mit 8-20 Vol.-% (Y₂O₃stabilisiertes ZrO₂) verstärktes Al₂O₃, gasdruckgesinterte oder gehippte Siliziumnitride (Si₃N₄) mit weniger als 10 Gew.-% Sinteradditiven sind.

5. Tribosysteme nach Anspruch 1, **dadurch gekennzeichnet, daß** die hochfesten Aluminium-Legierung mindestens eine Zugfestigkeit von Rm>450 MPa besitzen und aus den Legierungssystemen Al_{100-a-b-c}SeₐMe_{b}T_{c}, mit Se= Seltenen Erden, Me= Fe, Ni, Co und T= Mn, Co, Cr, Zr, Cr oder V, sowie 0,5 at.-%< A< 5 at.-%, 5 at.-%< 5< 15at.-% und 0,2at.-%< c< 3 at.-%, Al_{Rest}FeₐV_{b}X_{c}, wobei X= Zn, Co, Ni, Cr, Mo, Zr, Ti, Hf, Y oder Ce, mit 7 Gew.-% < a < 15 Gew.-%, 2 Gew.-% < b < 10 Gew.-% und c < 5 Gew.-% oder der Werkstoffklasse "AA20xx" bestehen.

6. Tribosysteme nach Anspruch 1, **dadurch gekennzeichnet, daß** die hochfesten Magnesium-Legierungen mindestens eine Zugfestigkeit von Rm>300 MPa besitzen und aus den Legierungssystemen MgₐAl_{b}Me_{c}, wobei Me= Ga, Sr und Ba bedeuten, mit 2< b < 12 und 1 < c < 10, sowie den Legierungssystemen Magnesium/Seltenen Erdenmetallen, wobei Cu, Ni, Sn, Zn und Ca, Al und Si bedeuten, bestehen.

7. Tribosysteme nach Anspruch 1, **dadurch gekennzeichnet, daß** die galvanischen Beschichtungen der Triboelemente eine Schichtdicke zwischen 10 µm und 200 µm, oder zwischen 200 µm und 500 µm aufweisen, und aus Nickelschichten mit bis zu 18 Gew.-% Phosphor, oder nano-kristallinen Chromschichten bestehen.

8. Tribosysteme nach Anspruch 7, **dadurch gekennzeichnet, daß** die nano-kristallinen Chromschichten eingelagerte Nanoteilchen aus Diamant, CrN, Cr₂N, oder Cr₃C₂ mit Partikelgrößen kleiner als 100 nm enthalten.

9. Tribosysteme nach einem der Ansprüche 1 bis 3, **dadurch gekennzeichnet, daß** die durch thermochemische Behandlungen wie, Vanadieren, und/oder Borieren und/oder Gasborieren auf den Oberflächen der Triboelemente erzeugten tribologischen Funktionsschichten eine Schichtdicke zwischen 10 µm und 100 µm aufweisen, wobei die stickstofflegierten Stähle vorzugsweise nitriert und die Stähle und Leichtstähle vorzugsweise vanadiert oder boriert werden.

10. Tribosysteme nach Anspruch 1, **dadurch gekennzeichnet, daß** die harten Dünnschichten eine Schichtdicke zwischen 1 µm und 10 µm aufweisen und aus CrN oder Cr₂N und stöchiometrische Mischungen daraus, TiCₓ mit 0,7<x≤1,0 , nano-kristallinen Diamant mit Kristallitgrößen zwischen 10-50 nm, ultranano-kristallinen Diamant mit Kristallitgrößen zwischen 2-10 nm, ADLC-Schichten als beliebige Gemische aus sp²- und sp³-hybridisiertem Kohlenstoff-Atomen und mit beliebigen Anteile an Wasserstoff bestehen.

11. Tribosysteme nach Anspruch 10, **dadurch gekennzeichnet, daß** die ADLC oder nano- oder ultrakristallinen Diamant-Schichten mit bis 10 At.-% der Metalle, wie Ti, Zr, Hf, Si, Ta oder W, oder Mischungen daraus dotiert und die Dotierung über der Schichtdicke auch gradiert ist.

12. Tribosysteme nach einem der o.g. Ansprüche, **dadurch gekennzeichnet, daß** unterhalb der Schichten aus ADLC, bzw. der nano-, oder der ultrakristallinen Diamant-Schichten haftverbessernde Zwischenschichten aus Ti, Zr, Hf, Si, Ta oder W, oder Mischungen daraus, aufgebracht sind.

13. Tribosysteme nach einem der o.g. Ansprüche, **dadurch gekennzeichnet, daß** die Beschichtungen mittels Physical Vapor deposition (PVD), wie Radio Frequency (RF) sputtering, Magnetron reactiv sputtering, electron-beam directed vapor-deposition (EB-DVD, EB-PVD, Elektronenstrahlverdampfen), Chemical Vapor Deposition (CVD), wie Plasma Enhanced (PE)-CVD, Low-pressure (LP)-CVD, dem Plasma-Nitrieren von Aluminium aufgebracht sind, wobei die Substratoberflächen vor dem Beschichten desoxidiert werden.

14. Tribosysteme nach einem der o.g. Ansprüche, **dadurch gekennzeichnet, daß** die Substrate vor dem Beschichten in reduzierender Atmosphäre desoxidiert werden.

15. Tribosysteme nach einem der o.g. Ansprüche, **dadurch gekennzeichnet, daß** die borierten und vanadierten tribologischen Funktionsschichten nach der thermochemischen Behandlung bei 400°C bis 600°C ca. eine halbe bis zwei Stunden an Luft oder Wasserdampf voroxidiert werden.

16. Tribosysteme nach Anspruch 1, **dadurch gekennzeichnet, daß** die Triboelemente aus Leichtstahllegierungen , welche mit 10 -30 Gew.-% Al und/ oder 1 - 5 gew.-% Si und/oder 1,0 - 10 Gew.-% Vanadium neben Kohlenstoff legiert sind.

17. Tribosysteme nach Anspruch 16, **dadurch gekennzeichnet, daß** der Leichtstahllegierung Kohlenstoff und/oder ZrB zulegiert ist.

18. Tribosysteme nach einem der Ansprüche 16 bis 17, **dadurch gekennzeichnet, daß** die Leichtstahllegierung aus AL-8,5Fe-1,7Si-1,3V besteht.
